# EUROPEAN PATENT APPLICATION

(11) **EP 2 143 697 A1**
(43) Date of publication of application: **13.01.2010**
(21) Application number: 08012634.5
(22) Date of filing: 11.07.2008
(51) Int. Cl.: C04B 35/64, A61C 13/083, H05B 6/64, H05B 6/80

(54) **Densification process of ceramics and apparatus therefor**

(71) Applicant: Ivoclar Vivadent AG, 9494 Schaan (LI)
(72) Inventor: Luypaert, Pieter Prof. Dr., B-9850 Merendree (BE); Ritzberger, Christian, A-6710 Nenzing (AT); Vleugels, Jozef Prof. Dr., B-2250 Olen (BE); Höland, Wolfram Prof. Dr., LI- 9494 Schaan (LI)
(74) Representative: UEXKÜLL & STOLBERG

(57) **Abstract**

The present invention relates to an arrangement for sintering a ceramic body, the arrangement including: an applicator defining a monomode microwave heating chamber; a thermal insulation structure disposed within the chamber; a susceptor disposed within the thermal insulation structure having a lower microwave coupling temperature than the ceramic body; the ceramic body arranged adjacent to the susceptor; a magnetron; and a temperature measurement device. Related methods are also described.

## Description

The invention relates to a microwave sintering methods and apparatus, such as microwave sintering of ceramic materials.

### BACKGROUND

In the discussion that follows, reference is made to certain structures and/or methods. However, the following references should not be construed as an admission that these structures and/or methods constitute prior art. Applicant expressly reserves the right to demonstrate that such structures and/or methods do not qualify as prior art.

Properties and consequently production costs of ceramic products are greatly influenced by the thermal treatment parameters such as firing or sintering temperatures and times. Inadequate sintering results in inadequate densification. Excessive sintering can also cause undesired material properties such as lower flexural strength due to large grain sizes.

Firing times in conventional furnaces can not be shortened arbitrarily. When high heating rates are applied, the temperature of the body being sintered is higher on the surface than on the inside. These temperature gradients can cause tension and cracks.

Microwave· heating of ceramic materials has been proposed as a technique which allows significantly shorter process times, as much higher heating rates can be realized, and sintering can be performed at lower temperatures compared to conventional furnaces.

Microwave energy is consumed by the body being sintered, and to a lesser extent, used to heat up the furnace chamber directly. By using microwave heating, the body being sintered heats up volumetrically. If only microwave energy is used, the surface temperature is lower than inside the samples leading to a temperature gradient. This gradient can, at high heating rates, cause similar problems as with conventional heating, only that the direction of the temperature gradient is opposite to that experience with conventional sintering.

A solution to this problem is use of a hybrid heating furnace, which combines the mechanisms and the advantages of microwave and conventional heating. In this process ceramic bodies are heated up homogeneously even if high heating rates are applied. Microwave sintering processes, however, are difficult to control because temperature measurements can not be made by metallic thermocouples. Beyond that, so called "thermal runaways" and "hot spot" effects can occur, as microwave absorption within the material increases with the temperature of the material. Thus, reliable temperature measurement during microwave sintering is even more important than in conventional sintering furnaces.

Microwave sintering of ceramic materials faces the problem that many ceramics do not absorb energy at room temperature. Thus, when practicing microwave-aided firing or sintering processes on such ceramics, the temperature gap between room temperature and a coupling temperature (T_{c}) at which the ceramic absorbs and is heated by microwave energy has to be bridged. For zirconia ceramics, T_{c} is about 700°C to about 750°C. To bridge the temperature gap, conventional resistance heating can be used to heat the ceramic up to the T_{c}. Alternatively, susceptor materials can be utilized. Susceptors are materials that are capable to absorb microwave radiation at room temperature. If placed near the body to be sintered, they partly irradiate the absorbed microwave energy with radiant heat so as to heat up the samples.

Two different types of microwave furnaces are known in the state of the art. These furnaces are referred to as monomode or multimode.

In a monomode furnace the interior, the applicator or firing chamber work as resonator. Microwaves of a particular frequency and wavelength enter the resonator and are partially reflected off the walls so that standing waves are formed within the chamber. These standing waves tend to provide a homogenous wave field within the chamber.

In a multi-mode furnace, a high wave density, but not necessarily homogenous microwave field is generated in the resonator in order to try to achieve an even absorption of the microwaves by the samples. However, the absorption is often satisfactorily even only when a stirrer or turntable is utilized. For example, "microwave stirrers", which are metallic field agitators of a suitable geometry can be utilized to homogenize the magnetic field. Stirrers are rotating, complexly shaped metal wheels inside the furnace interior (often at the furnace "ceiling", under a suitable cover) constantly changing the oscillating modes. Alternatively, the sample can be rotated on a turntable within the chamber during heating, which is known from kitchen microwave ovens. Most microwave furnaces currently in use for sintering ceramics are believed to be multimode-type furnaces.

### SUMMARY

The invention optionally addresses one or more shortcomings associated with the state of the art.

According to one aspect, the present invention provides an arrangement for sintering a ceramic body, the arrangement comprising: an applicator defining a monomode microwave heating chamber; a thermal insulation structure disposed within the chamber; a susceptor disposed within the thermal insulation structure having a lower microwave coupling temperature than the ceramic body; the ceramic body arranged adjacent to the susceptor; a magnetron; and a temperature measurement device.

According to another aspect, the present invention provides a method of sintering a ceramic body, the method comprising: providing an arrangement comprising: an applicator defining a monomode microwave heating chamber; a thermal insulation structure disposed within the chamber; a susceptor disposed within the thermal insulation structure having a lower microwave coupling temperature than the ceramic body; a magnetron; and a temperature measurement device; placing the ceramic body adjacent to the susceptor; introducing microwaves into the chamber in order to heat the susceptor, the susceptor heating the ceramic body by radiant heating until the coupling temperature of the ceramic body is reached, upon which the ceramic body is heated with the microwaves to a sufficient temperature and for a sufficient time so as to cause densification of the ceramic body.

According to a further aspect, the present invention provides a method of forming a dental article, the method comprising: shaping a ceramic body; and sintering the ceramic body according to the above described method.

### BRIEF DESCRIPTION OF THE DRAWING FIGURES

Figure 1 is a schematic illustration of a microwave sintering arrangement according to one aspect of the present invention.

Figure 2 is a plot of Time vs. Temperature for a sintering technique performed according to another aspect of the present invention.

Figure 3 is a micrograph of the microstructure of a ceramic sintered according to the principles of the present invention.

Figure 4 is a micrograph of the microstructure of a ceramic sintered according to conventional techniques.

### DETAILED DESCRIPTION

According to certain aspects, the present invention provides an arrangement which includes the microwave furnace within which homogenous high energy microwave fields are generated. The furnace may contain auxiliary material, or so-called susceptor elements. The susceptor elements are placed adjacent to a ceramic body or bodies which are to be sintered within the furnace chamber. Susceptors absorb microwave energy at roughly room temperature and thus heat up quickly upon the initial application of microwave energy thereto. The susceptor elements emit radiant heat toward the ceramic bodies to be sintered, thus the bodies absorb. radiant heat from the susceptors, which increases their core temperatures. Once the ceramic bodies are heated to a certain temperature, often referred to as the coupling temperature (T_{c}), the ceramic bodies are then capable of being heated by the microwave energy within the chamber. The microwave field and power is controlled in a way such that temperature gradients within the bodies to be sintered are minimized. Precise temperature measurements may be performed by means of a suitable temperature measurement device, such as a pyrometer. In the furnace according to the present invention, the temperature differences in the bodies to be sintered are small and the overall process times can be drastically reduced. For example, instead of a 6-8 hour sintering cycle, process times performed with the arrangement of the present invention can result in highly dense sintered ceramic parts during a sintering cycle which can be performed in about 1 hour or less. Bodies sintered according to the present invention also exhibit the same physical properties as bodies sintered according to convention techniques.

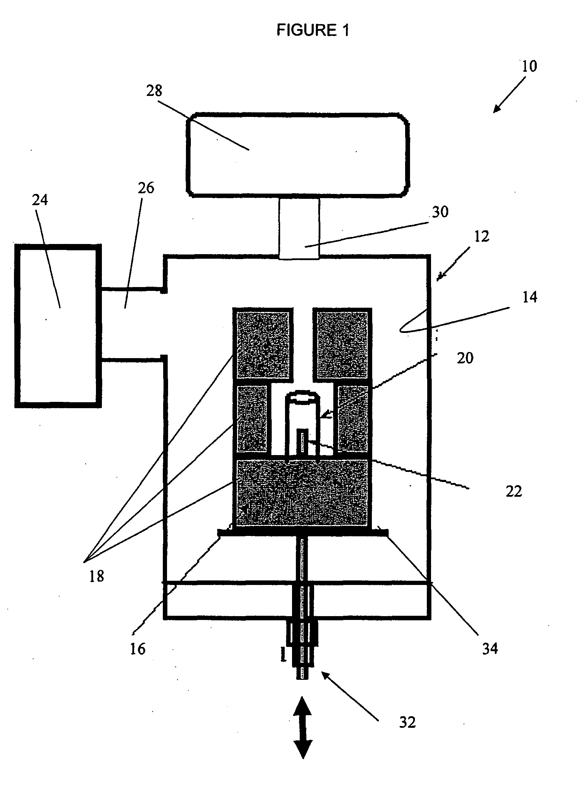

An exemplary arrangement 10 formed according to the principles of the present invention is illustrated in Figure 1. As illustrated therein, the arrangement 10 includes an applicator 12. The applicator 12 can possess any suitable geometry or dimensions, and can be formed from any suitable materials. According to certain embodiments of the present invention, the applicator 12 is cylindrical or tubular, and is formed from stainless steel.

According to one embodiment, the applicator 12 defines a microwave heating chamber 14. Again, the chamber 14 can take any suitable geometry or dimensions, and can be formed of any suitable material(s). One nonlimiting example of the chamber is a tubular-shaped chamber. According to certain aspects, the chamber 14 is provided in the form of a monomode microwave heating chamber which is constructed to produce homogenous standing microwaves therein.

The chamber 14 preferably contains a suitable thermal insulation structure 16. The thermal insulation structure acts to improve the efficiency of the microwave heating process and prevent undue heat loss. The thermal insulation structure 16 can take any suitable form, and can be constructed from any suitable materials. In this regard, according to certain embodiments, thermal insulation structure 16 is constructed from one or more materials which do not couple with the microwave energy contained within the chamber during a normal sintering cycle. According to one optional embodiment, the thermal insulation structure is formed from multiple rings of thermal insulation material 18. The thermal insulation material may optionally be constructed of an aluminum oxide material.

According to further aspects, one or more susceptors 20 may be placed within the thermal insulation structure 16. As noted previously, the one or more susceptors 20 absorb microwave energy at relatively low temperatures (e.g., room temperature) so that they quickly heat up from the beginning of the microwave sintering cycle. The radiant heat produced by the one or more susceptors 20 is used to increase the temperature of one or more ceramic bodies 22 located adjacent to the one or more susceptors 20. Thus, the temperature of the one or more ceramic bodies 22 to be sintered can be raised by the radiant heat emitted from the one or more susceptors 20 until the point where the coupling temperature (T_{c}) of the one or more ceramic bodies 22 is reached. At this point, the microwave energy contained within the chamber 14 causes heating internal to the one or more ceramic bodies 22 contained within the chamber 14.

The one or more susceptors can take any suitable form, geometry, or dimensions. In addition, the one or more susceptors 20 can be formed of . any suitable materials. According to one illustrative embodiment, a susceptor is formed from a silicon carbide material. According to a further illustrative embodiment, the susceptor is in the form of an open cylinder or tube, within which the one or more ceramic bodies 22 are located for sintering. The susceptor can have any open form consistent with the symmetry of the cavity and sample. The form of the susceptor should be partially transparent or open for microwaves to avoid a Faraday cage effect. The susceptor should be thin enough to keep a certain process efficiency. If the susceptor is too thick the energy will be concentrated too highly in the susceptor. The susceptor material can comprise any material that couples with microwave energy at room temperatures. The susceptor material should also- be resistant to runaway heating. The material is chosen to operate in atmospheric and/or neutral conditions up to 1700°C. Any material that is compatible with these constraints is applicable. Specific examples include a number of transition metal oxides such as V₂O₅, WO₃, certain binary and ternary metal oxides, Prosvkite compounds like BaTiO₃, halides such as Agl, Cul, carbides, silicides, doped silicon carbide and amorphous carbon.

The one or more ceramic bodies 22 to be sintered can also take any suitable form, have any suitable geometry or dimensions, and be formed of any suitable ceramic materials. According to one embodiment, the one or more ceramic bodies 22 are formed from zirconia, which includes, but is not limited to, yttria-stabilized tetragonal zirconia. According to further embodiments, the one or more ceramic bodies 2 to be sintered can be in the form of a dental article. Suitable dental articles include, but are not limited to: a veneer; inlay; on lay; crown; partial crown; bridge; fixed partial denture; Maryland bridge; implant abutment or hole implant; or framework. According to a further embodiment, the dental article may comprise a body which has been shaped or milled by a CAD/CAM assisted shaping technique.

The arrangement 10 further includes a source of microwave energy 24. Any suitable source of microwave energy 24 is contemplated by the present invention. According to certain embodiments, the source for microwave energy comprises a magnetron. The microwave energy emitted from the source 24 can have any suitable frequency, typically between 800 MHz to 30 GHz. According to one optional embodiment, the microwave. energy emitted from the source comprises a wavelength of 2.45 GHz, and has a wavelength of approximately 12.2 cm. The microwave source 24 may be in direct communication with the chamber 14. Alternatively, the microwave source 24 may be coupled to an adaptation-waveguide section 26 through which the microwave energy passes from the source 24 to the chamber 14 in an efficient way. The adaptation-waveguide 26 may have an efficiency and homogenizing effect on the microwaves emitted from the source 24 prior to entry into the chamber 14.

The temperature during the microwave sintering process inside the chamber 14 can be monitored by any suitable temperature measurement device. According to one embodiment, the temperature measurement device comprises a pyrometer 28. According to a further embodiment, the pyrometer 28 comprises an optical pyrometer. The pyrometer 28 may be in direct communication with the chamber 14. Alternatively, a glass fiber, a waveguide or window 30 may provide the necessary communication between the pyrometer and the chamber 14.

The arrangement 10 may further optionally include a position adjustment mechanism 32. According to one embodiment, the optional position adjustment mechanism 32 is utilized to move a stage 34 upon which the thermal insulation structure 16, susceptor 20 and ceramic body 22 are placed along the direction indicated by the double-headed arrow in Figure 1. This position adjustment mechanism allows the sample or ceramic body 22 to be precisely located within the chamber 14 at a location such that microwaves impinge on the ceramic body 22 at a point which coincides with the maximum amplitude of their wavelength. This placement promotes maximum absorption of microwave energy by the ceramic body 22. The optimal location within the chamber 14 can be determined via calibration of the arrangement 10 by any suitable technique familiar to those in the art. For example, microwave energy output/absorption at various points within the chamber 14 can be measured. Based on these measurements and some calculations, the optimal position for the ceramic body 22 can be determined.

According to further aspects, the present invention is directed to methods or techniques for sintering ceramic bodies utilizing microwave energy. Generally speaking, methods of the present invention are performed such that the microwave field and power is controlled in a way such that temperature gradients are minimized. According to the present invention, one or more ceramic bodies can be sintered in an environment without pressure, and which corresponds to ambient conditions. Ceramic bodies sintered according to the principles of the present invention can be exposed to lower temperatures than conventional sintering techniques. In addition, sintering methods performed according to the principles of the present invention take significantly less time than conventional sintering techniques. For example, conventional sintering techniques which take six to eight hours, may be performed in one hour or less according to the principles of the present invention. Further, methods performed according to the present invention result in the formation of highly dense ceramic materials. According to certain embodiments, ceramic materials sintered according to the present invention possess about 99% theoretical density, or more.

According to one embodiment, a method performed according to the present invention includes: providing an arrangement having one or more of the features of the arrangement 10 previously described above; placing one or more ceramic bodies adjacent to a susceptor; introducing microwaves into the chamber in order to heat the susceptor, the susceptor heating the ceramic body by radiant heating until the coupling temperature of the ceramic body is reached, at which time the ceramic body is then heated with a microwave energy to a sufficient temperature, and for a sufficient time, so as to cause densification of the ceramic body.

The ceramic body can be heated at any suitable rate. According to certain embodiments, the ceramic body may be heated within one minute up to the coupling temperature T_{c} of about 700°C to about 750°C, and above 750°C at a controlled rate between 50°K per minute and 200°K per minute up to the sintering temperature, without overshoot or thermal runaway. According to one optional embodiment, the ceramic body is heated above the coupling temperature at a rate of more than 100°K per minute up to 200°K per minute, particularly at a rate of 140°K per minute, or at a rate of 150°K per minute.
1. The method performed according to the present invention can be utilized to heat the ceramic material to any suitable maximum temperature. For example, the ceramic body may be heated to a maximum temperature of about 700°C to about 1700°C. According to one optional embodiment, the ceramic body is heated to a maximum temperature of about 1400°C to 1500°C. Another example of a range is about 1200°C to about 1700°C.

According to the techniques of the present invention, the ceramic body can be held at the maximum temperature for any suitable period of time. By way of example, the ceramic body can be held at the maximum temperature for about 20 to about 40 minutes. According to one optional embodiment, the ceramic body is held at the maximum temperature for about 30 minutes.

According to additional aspects, the methods performed according to the principles of the present invention include a cooling stage which can be performed at any suitable rate. According to one illustrative, non-limiting example, the ceramic body can be cooled at a rate of about 40°K per minute to about 150°K per minute. According to a further illustrative example, the ceramic body is cooled from the maximum temperature at a rate of about 50°K per minute.

According to additional aspects, the above-mentioned cooling rate can be controlled for a certain period of time, or until a certain target temperature is reached, after which cooling is allowed to proceed without intervention. For purposes of illustration, the ceramic body can be cooled at any of the above-mentioned rates until a temperature of about 500°C is reached.

As previously noted, a ceramic body sintered according to the techniques of the present invention can be provided with a relatively high theoretical density. For example, the ceramic body which is sintered according to the techniques of the present invention can comprise at least about 99% of its theoretical density.

As further noted above, the sintering methods and techniques of the present invention require significantly less time than conventional sintering techniques. For purposes of illustration, a ceramic body can be sintered by a method of the present invention to about 99% of its theoretical density or more in about one hour or less.

The sintering methods and techniques of the present invention can find application to numerous types of ceramic bodies. According to one optional embodiment, the ceramic body to be sintered is formed at least in part from zirconia. According to a further optional embodiment, the zirconia comprises YTZ zirconia. According to additional alternative embodiments, the ceramic body can take any suitable form or shape. According to one optional embodiment, the ceramic body comprises a dental article. Suitable dental articles include, but are not limited to: a veneer, inlay, on lay, crown, partial crown, bridge,. fixed partial denture, Maryland bridge, implant abutment or hole implant, or framework.

Methods of sintering performed according to the principles of the present invention may further include one or more steps which involve positioning the ceramic body within the chamber so as to locate the body in a position that coincides with the location of the maximum amplitude of the microwaves contained in the microwave chamber.

Microwave sintering techniques of the present invention may optionally utilize one or more susceptors to produce radiant heat that raises the temperature of the ceramic body to its coupling temperature. Any suitable susceptor element(s) can be utilized as previously described herein. According to one optional embodiment, the susceptor comprises an open cylindrical or tubular member formed of silicon carbide. According to an alternative embodiment, the temperature of the ceramic body can be raised by alternative measures. For example, electrical resistance elements contained within the furnace chamber can be utilized to raise the temperature of the ceramic body until it reaches its coupling temperature.

According to an additional optional embodiment, the ceramic body to be sintered can be in the form of a body which has been shaped by a CAD/CAM assisted shaping or milling technique.

### Example

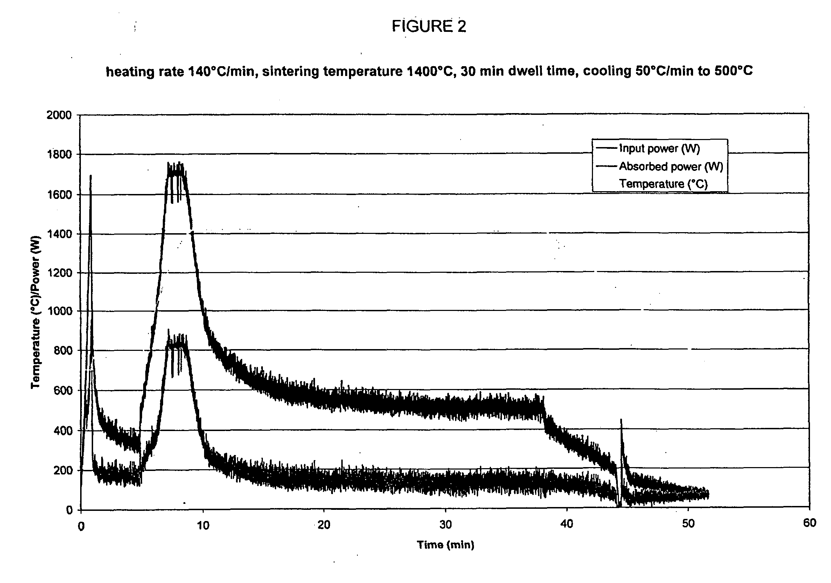

A zirconia bridge framework was milled out of a pre-sintered porous block of zirconia, and then sintered in a prototype of a monomode sintering furnace at a maximum temperature of 1400°KC. More particularly, the material was a Y-PSC (ZirCAD, Ivoclar Vivadent, FL-9494 Schaan). The machine used to mill the block was a commercial dental CAD/CAM milling machine (CEREC InLab, Sirona, 0-64625 Bensheim). The milled block or framework was placed in a silicon carbide tube, which was used as a susceptor. The heating rate utilized was 140°K per minute. The dwell time at maximum temperature was 30 minutes, and a controlled cooling rate of 50°K per minute was performed from 1400°C to 500°C. The total cycle time was 52 minutes. The sintering profile for this experiment is contained in Figure 2.

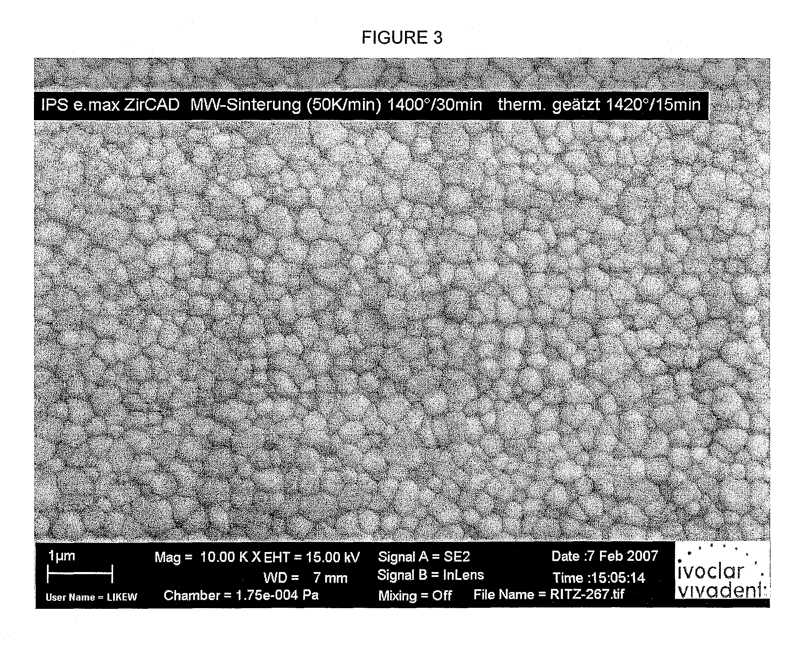

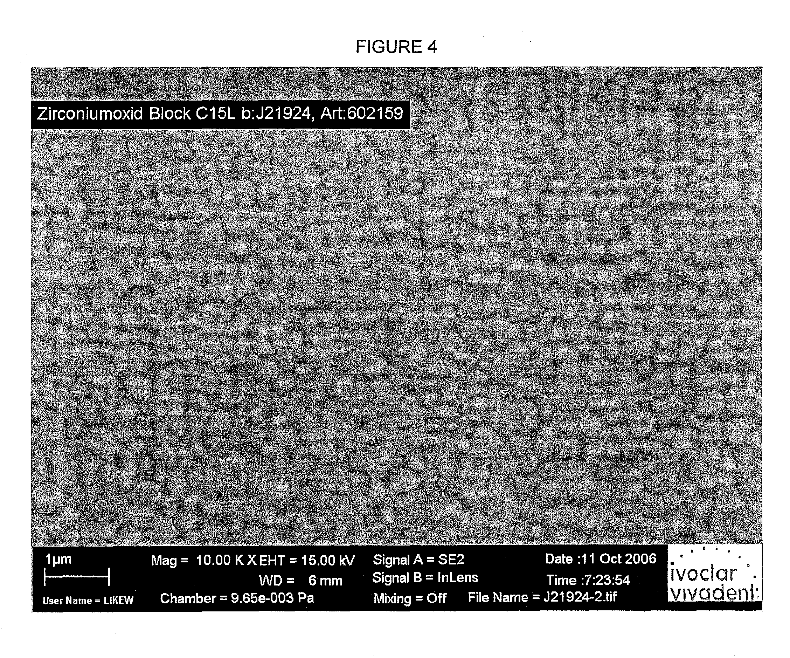

The resulting density of the sintered framework was measured at 6.04 g/cm³, or 99.2% of its theoretical density. The microstructure of the sintered zirconia framework was compared to the microstructure of a similar ceramic body sintered according to conventional techniques at 1500°C or a cycle time of about 6 hours. The microstructure of the sintered framework of this example is illustrated in Figure 3 via the micrograph contained therein. The microstructure of the comparative reference is illustrated by the micrograph contained in Figure 4. A comparison of the microstructures depicted in Figures 3 and 4 indicates that no significant differences in microstructure are produced by the microwave sintering arrangement and techniques performed according to this example of the present invention.

The arrangements, methods and techniques of one or more embodiments of the present invention may optionally provide one or more of the following advantages:
selective heating of the ceramic bodies to be sintered, and not the volume of the heating vessel within which they are placed;
minimization of sintering cycle times;
minimization of energy consumed during the sintering cycles; minimization of heating inertia (ie., after switching off the microwave radiation, the heating stops almost immediately except the limited thermal inertia of the susceptor and at lower temperatures (500°C) the refractory material); and
sintering of a ceramic body within a microwave chamber which contains a highly homogenous field of microwaves therein (i.e., a monomode, i.e., arrangements, methods and techniques which utilize a monomode microwave chamber).

All numbers expressing quantities or parameters used in the specification are to be understood as additionally being modified in all instances by the term "about". Notwithstanding that the numerical ranges and parameters set forth, the broad scope of the subject matter presented herein are approximations, the numerical values set forth are indicated as precisely as possible. For example, any numerical value may inherently contain certain errors, evidenced by the standard deviation associated with their respective measurement techniques, or round-off errors and inaccuracies.

Although the present invention has been described in connection . with preferred embodiments thereof, it will be appreciated by those skilled in the art that additions, deletions, modifications, and substitutions not specifically described may be made without department from the spirit and scope of the invention as defined in the appended claims.

## Claims

1. An arrangement for sintering a ceramic body, the arrangement comprising:
an applicator defining a monomode microwave heating chamber;
a thermal insulation structure disposed within the chamber;
a susceptor disposed within the thermal insulation structure having a lower microwave coupling temperature than the ceramic body, the ceramic body arranged adjacent to the susceptor;
a magnetron; and
a temperature measurement device.

2. The arrangement of claim 1, wherein the ceramic body comprises a dental article.

3. The arrangement of claim 2, wherein the dental article comprises one or more of: a veneer, inlay, onlay, crown, partial crown, bridge, fixed partial denture, Maryland bridge, implant abutment or whole implant, or framework.

4. The arrangement of claim 1, wherein the chamber is constructed and dimensioned so as to produce homogenous standing microwaves exhibiting their maximum amplitude therein.

5. The arrangement of claim 1, wherein the susceptor is cylindrical, and the ceramic body is located inside the cylinder.

6. A method of sintering a ceramic body, the method comprising:
providing an arrangement comprising: an applicator defining a monomode microwave heating chamber; a thermal insulation structure disposed within the chamber; a susceptor disposed within the thermal insulation structure having a lower microwave coupling temperature than the ceramic body; a magnetron; and a temperature measurement device;
placing the ceramic body adjacent to the susceptor;
introducing microwaves into the chamber in order to heat the susceptor, the susceptor heating the ceramic body by radiant heating until the coupling temperature of the ceramic body is reached, upon which the ceramic body is heated with the microwaves to a sufficient temperature and for a sufficient time so as to cause densification of the ceramic body.

7. The method of claim 6, wherein the ceramic body is heated, after the coupling temperature has been reached, at a rate of 50°K/minute to 200°K/minute up to a maximum temperature.

8. The method of claim 6, wherein the ceramic body is held at the maximum temperature for about 20 to about 40 minutes.

9. The method of claim 6, wherein the ceramic body is cooled from the maximum temperature at a rate of about 40°K/minute to about 150°K/minute.

10. The method of claim 6, wherein the ceramic body is sintered to at least about 99% of its theoretical density.

11. The method of claim 6, wherein the entire sintering process is performed in less than about one hour.

12. A method of forming a dental article, the method comprising:
shaping a ceramic body; and
sintering the ceramic body according to the method of claim 6.

13. The method of claim 12, wherein the ceramic body is shaped into the form of one or more of: a veneer, inlay, onlay, crown, partial crown, bridge, fixed partial denture, Maryland bridge, implant abutment or whole implant, or framework.

14. The method of claim 12, further comprising constructing and dimensioning the chamber so as to produce homogenous standing microwaves exhibiting their maximum amplitude therein.

15. The method of claim 14, further comprising manipulating the position of the ceramic body within the chamber so as to locate the ceramic body in a position that coincides with the location of the maximum amplitude of the homogenous microwaves contained therein.
